# EUROPÄISCHE PATENTANMELDUNG

(11) **EP 1 632 399 A1**
(43) Veröffentlichungstag der Anmeldung: **08.03.2006**
(21) Anmeldenummer: 05017357.4
(22) Anmeldetag: 10.08.2005
(51) Int. Cl.: B60R 16/02

(54) **Verfahren zum Betreiben elektrischer Verbraucher in einem Kraftfahrzeug**

(30) Priorität: 18.08.2004 DE 102004039957
(71) Anmelder: GM Global Technology Operations, Inc., Detroit, MI 48265-3000 (US)
(72) Erfinder: Bonne, Uwe, 63303 Dreieichenhain (DE); Diehl, Peter G, 65421 Gross-Gerau (DE); Müller, Werner, 64347 Griesheim (DE)
(74) Vertreter: Daniel, Ulrich W.P.

(57) **Zusammenfassung**

Um ein Verfahren zum Betreiben elektrischer Verbraucher in einem Kraftfahrzeug zu schaffen, wobei ein eingeschalteter Verbraucher nach dem Ausschalten einer Zündung des Kraftfahrzeugs in einen energiesparenden Betriebsmodus geschaltet wird, mit dem dem Nutzer größere Freiheiten bei der Nutzung der elektrischen Verbraucher verliehen werden, kann bei ausgeschalteter Zündung ein Nutzer des Kraftfahrzeugs einen elektrischen Verbraucher manuell aktivieren.

## Beschreibung

Die Erfindung bezieht sich auf ein Verfahren zum Betreiben elektrischer Verbraucher in einem Kraftfahrzeug, wobei ein eingeschalteter Verbraucher nach dem Ausschalten einer Zündung des Kraftfahrzeugs in einen energiesparenden Betriebsmodus geschaltet wird.

Moderne Kraftfahrzeuge weisen eine Vielzahl elektrischer Verbraucher, z. B. eine Audioanlage, eine Klimaanlage, eine vorgeschriebene Beleuchtungsanlage und unter anderem eine Innenraumbeleuchtung sowie eine direkte oder indirekte Instrumentenbeleuchtung, auf. Diese elektrischen Verbraucher werden üblicherweise von einem zentralen Steuergerät im Kraftfahrzeug zur Steuerung aller Funktionen angesteuert und sind über das Bordnetz mit der üblichen 12V-Batterie des Kraftfahrzeugs zur Energieversorgung verbunden. Die Ansteuerung der Verbraucher sowie die Rückmeldung über ihren jeweiligen Schaltzustand erfolgt beispielsweise über dem Fachmann bekannte CAN-Datenbusse.

Aufgrund der Vielzahl der elektrischen Verbraucher wird der Batterie bei ausgeschalteter Zündung, d. h. wenn eine Lichtmaschine am Motor keinen Ladestrom in die Batterie einspeist, eine große Strommenge entzogen, da beispielsweise beim Halten an einer geschlossenen Schranke eines Bahnübergangs das Abblendlicht, die Audioanlage sowie ggfl. die Innenraumbeleuchtung eingeschaltet ist. Diese Belastung der Batterie kann dazu führen, dass besonders bei einer älteren Batterie am Ende ihrer Lebensdauer aufgrund der hohen Stromentnahme zum Neustart des Kraftfahrzeugs nicht mehr genügend Batteriekapazität für den Anlasser des Motors vorhanden ist. Um dem entgegen zu wirken ist es bekannt, bestimmte elektrische Verbraucher bei ausgeschalteter Zündung, vorzugsweise vom zentralen Steuergerät, automatisch abzuschalten bzw. in eine energiesparendere Betriebsart umzuschalten. Dies kann beispielsweise eine Innenraumbeleuchtung sein, die nach einer festlegbaren Zeitspanne nach dem Ausschalten der Zündung zumindest heruntergedimmt wird. In gleicher Weise wird ein eingeschaltetes Abblendlicht selbsttätig auf Standlicht oder Parklicht umgeschaltet, um den Energieverbrauch zu verringern.

Des Weiteren ist es bekannt, insbesondere Audioanlagen unabhängig von dem Schaltzustand der Zündung unmittelbar an die Batterie anzuschließen, um die Audioanlage auch bei abgezogenem Zündschlüssel bzw. ausgeschalteter Zündung ein- und ausschalten zu können.

Die bekannten Lösungen sind insofern nachteilig, als bei ausgeschalteter Zündung und insbesondere bei abgezogenem Zündschlüssel dem Nutzer des Kraftfahrzeugs der Schaltzustand der elektrischen Verbraucher des Kraftfahrzeugs von der eingestellten Betriebsart im Steuergerät vorgegeben ist und er die Verbraucher nicht in der von ihm gewünschten Weise nutzen kann.

Es ist Aufgabe der Erfindung, ein Verfahren zum Betreiben elektrischer Verbraucher in einem Kraftfahrzeug der eingangs genannten Art zu schaffen, mit dem der Nutzer einen elektrischen Verbraucher in einer von ihm gewünschten Art und Weise betätigen oder benutzen kann.

Erfindungsgemäß wird die Aufgabe dadurch gelöst, dass bei ausgeschalteter Zündung ein elektrischer Verbraucher durch einen Nutzer des Kraftfahrzeugs manuell aktiviert wird.

Der Kerngedanke der Erfindung besteht darin, dass es dem Nutzer des Kraftfahrzeugs ermöglicht wird, auch bei ausgeschalteter Zündung, nachdem sich ein oder mehrere elektrische Verbraucher selbsttätig bzw. vom Steuergerät angesteuert in einen energiesparenden Betriebsmodus geschaltet haben, den oder die Verbraucher wieder zu aktivieren. Dies erfolgt jedoch nur dann, wenn eine entsprechende Aktivierung vom Nutzer manuell auf beliebige Weise angefordert und der Verbraucher wieder eingeschaltet wird. Somit wird die Möglichkeit geschaffen, einen elektrischen Verbraucher, der im Stand der Technik bei ausgeschalteter Zündung und gegebenenfalls nach Verstreichen einer selbsttätigen Abschaltzeit nicht mehr aktivierbar ist, diesen dennoch zu aktivieren.

Der Vorteil der Erfindung liegt darin, dass das erneute Einschalten eines elektrischen Verbrauchers nach dem selbsttätigen Abschalten in einfacher Weise hard- und/oder softwaremäßig im zentralen Steuergerät implementiert werden kann, wodurch keine zusätzlichen elektronischen Bauteile notwendig sind und das Verfahren kostengünstig ausgeführt werden kann. Die Art des manuellen Aktivierens eines Verbrauchers kann vom Fachmann in an sich beliebiger Weise oder bevorzugt wie im Folgenden beschrieben ausgestaltet sein.

In vorteilhafter Weise wird ein elektrischer Verbraucher über ein Betätigungselement im Kraftfahrzeug erneut aktiviert. Dies kann beispielsweise ein separater Schalter im Bereich des Armaturenbretts sein, mit dem ein oder mehrere Verbraucher wiederum mit elektrischer Energie trotz ausgeschalteter Zündung versorgt werden. Dabei ist es möglich, diesen Schalter derart auszuführen, dass alle diejenigen elektrischen Verbraucher, die vor dem Umschalten in den energiesparenden Betriebsmodus eingeschaltet waren, nach Betätigung des Schalters erneut eingeschaltet werden. Ebenso ist es möglich, dass der jeweilige elektrische Verbraucher trotz ausgeschalteter Zündung durch erneutes Betätigen des zugehörigen Betätigungselements erneut aktiviert wird. Beispielsweise kann ein Abblendlicht, das selbsttätig auf das energiesparendere Standlicht zurückgeschaltet wurde, durch erneutes Aus- und Einschalten mit dem zugehörigen Betätigungselement wiederum im normalen Abblendlichtbetrieb betrieben werden. Des Weiteren ist es möglich, das erneute Aktivieren eines oder mehrerer elektrischer Verbraucher mit einer Fernbedienung, die beispielsweise am Kraftfahrzeugschlüssel für eine zentrale Verriegelung aller Türschlösser bereits vorhanden ist, durchzuführen. Auch hier können ein oder mehrere elektrische Verbraucher entweder unabhängig voneinander oder gemeinsam angesteuert werden.

Als elektrische Verbraucher, die trotz ausgeschalteter Zündung vom Nutzer, wenn dies von ihm gewünscht ist, wieder aktiviert werden können, sind unter anderem vorgeschlagen: ein Abblendlicht, ein Parklicht, eine Innenraumbeleuchtung, eine Instrumenten-Hintergrundbeleuchtung sowie weitere beliebige elektrische Verbraucher im Kraftfahrzeug. Dabei können diese Verbraucher entweder jeder einzeln oder alle gemeinsam wieder aktiviert werden.

Nach einer weiteren Ausführungsform kann das Aktivieren des elektrischen Verbrauchers nach einem Abschließen des Kraftfahrzeugs erfolgen. Das bedeutet, dass nach dem Abschließen und einer gegebenenfalls einstellbaren Wartezeit alle elektrischen Verbraucher, insbesondere ein Abblendlicht, eine Innenraum- sowie eine Instrumentenbeleuchtung, in einen energiesparenden Betriebsmodus geschaltet werden. Es versteht sich, dass auch die zugehörigen Steuergeräte im Kraftfahrzeug entsprechend in einen "Sleep-Modus" geschaltet werden, um weniger Energie zu verbrauchen. Möchte der Nutzer dennoch einen der vorstehend genannten oder einen weiteren elektrischen Verbraucher aktivieren und nutzen, kann er dies auch nach dem Verstreichen der Abschaltzeit, beispielsweise über eine Fernbedienung, auslösen, um u. a. ein parkendes Kraftfahrzeug mit eingeschaltetem Abblendlicht ausreichend zu kennzeichnen.

Bei einer Weiterbildung kann das Umschalten vom Normalbetrieb in den energiesparenden Betriebsmodus eines oder mehrerer elektrischer Verbraucher auch manuell vom Nutzer ausgelöst werden. Üblicherweise werden nach dem Abziehen des Zündschlüssels und/oder nach dem Abschließen der Fahrertür von außen die elektrischen Verbraucher, gegebenenfalls nach einer Wartezeit, in den energiesparenden Betriebsmodus umgeschaltet. Dies kann aber auch vom Nutzer selbst über ein Betätigungselement und/oder ferngesteuert, z. B. mit der Fernbedienung der Zentralverriegelung ausgelöst werden. Das Betätigungselement kann dasselbe sein wie das vorstehend beschriebene oder ein weiteres, das im Bereich des Armaturenbretts angeordnet ist. Somit ist es dem Nutzer möglich, beispielsweise beim Warten an einer geschlossenen Schranke mit ausgeschalteter Zündung den Energieverbrauch in gewünschter Weise zu senken und die Batterie zu schonen. Die elektrischen Verbraucher können dabei unabhängig voneinander oder gemeinsam umgeschaltet werden.

Es versteht sich, dass die vorstehend genannten Merkmale nicht nur in den jeweils angegebenen Kombinationen sondern auch in anderen Kombinationen verwendbar sind. Der Rahmen der Erfindung ist nur durch die Ansprüche definiert.

## Patentansprüche

1. Verfahren zum Betreiben elektrischer Verbraucher in einem Kraftfahrzeug, wobei ein eingeschalteter Verbraucher nach dem Ausschalten einer Zündung des Kraftfahrzeugs in einen energiesparenden Betriebsmodus geschaltet wird, **dadurch gekennzeichnet, dass** bei ausgeschalteter Zündung ein elektrischer Verbraucher durch einen Nutzer des Kraftfahrzeugs manuell aktiviert wird.

2. Verfahren nach Anspruch 1, **dadurch gekennzeichnet, dass** das Aktivieren über ein Betätigungselement im Kraftfahrzeug und/oder über eine Fernbedienung erfolgt.

3. Verfahren nach Anspruch 1 oder 2, **dadurch gekennzeichnet, dass** der elektrische Verbraucher ein Abblendlicht und/oder ein Parklicht und/oder eine Innenraumbeleuchtung und/oder eine Instrumenten-Hintergrundbeleuchtung ist.

4. Verfahren nach einem der Ansprüche 1 bis 3, **dadurch gekennzeichnet, dass** das Aktivieren des elektrischen Verbrauchers nach einem Abschließen des Kraftfahrzeugs erfolgt.

5. Verfahren nach einem der Ansprüche 1 bis 4, **dadurch gekennzeichnet, dass** der elektrische Verbraucher vom Nutzer in einen energiesparenden Betriebsmodus umgeschaltet wird.
